# EUROPÄISCHE PATENTANMELDUNG

(11) **EP 1 452 085 A2**
(43) Veröffentlichungstag der Anmeldung: **01.09.2004**
(21) Anmeldenummer: 04001302.1
(22) Anmeldetag: 22.01.2004
(51) Int. Cl.: A01D 75/20

(54) **Rasenmäher mit Sicherheitsschalteinrichtung**

(30) Priorität: 21.02.2003 DE 10307658
(71) Anmelder: Kress, Werner, D-89077 Ulm (DE)
(72) Erfinder: Kress, Werner, D-89077 Ulm (DE)
(74) Vertreter: Dr. Weitzel & Partner

(57) **Zusammenfassung**

Die Erfindung betrifft einen Rasenmäher
- mit einer um eine vertikale Achse umlaufenden Schneideinrichtung;
- mit einem Motor;
- mit einem Gehäuse, das den Motor und die Schneideinrichtung umgibt, und das einen in Fahrtrichtung nach hinten gerichteten Auslass für einen grasführenden Luftstrom aufweist;
- es ist eine Sicherheits- und Schalteinrichtung an einem Führungsholm angelenkt, umfassend einen Schaltbügel.

Der erfindungsgemäße Rasenmäher ist gekennzeichnet durch die folgenden Merkmale:
- der Schaltbügel ist um einen Drehzapfen in drei verschiedene Positionen verschwenkbar;
- jeder Position ist wenigstens eine Funktion zugeordnet;
- in einer nicht-operativen ersten Position ist der Motor positiv stillgesetzt, und der Führungsholm in seiner Betriebsstellung verriegelt;
- in einer zweiten Position ist der Motor aktivierbar, und der Führungsholm ist verriegelt;
- in einer dritten Position ist der Motor positiv stillgesetzt, und die Arretierung des Führungsholmes ist gelöst und somit schwenkbar;
- die Stellung des Schaltbügels in einer bestimmten Position erlaubt lediglich das Ausführen derjenigen Funktion, die dieser Position zugeordnet ist, so dass das Ausüben anderer Funktionen unmöglich ist.

## Beschreibung

Die Erfindung betrifft einen Rasenmäher gemäß dem Oberbegriff des Anspruchs 1. Dabei kommt als Motor in erster Linie ein Benzinmotor in Betracht, aber auch ein Elektromotor.

Ein solcher Rasenmäher weist eine Schneideinrichtung auf. Die Schneideinrichtung besteht vorzugsweise aus einem langgestreckten Messerblatt, das in der Mitte seiner Länge um eine vertikale Achse drehbar gelagert ist. Das Messerblatt ist an seinen beiden Längenabschnitten beidseits der genannten Drehachse jeweils mit einer Schneide versehen, der eine Längenabschnitt auf der einen Schmalkante, und der andere Längenabschnitt auf der gegenüberliegenden Schmalkante. Das Messerblatt ist in vielen Fällen im wesentlichen horizontal angeordnet. Es kann auch eine gewisse Neigung gegen die Horizontalebene aufweisen, so dass die Schneideinrichtung nicht nur ihre Schneid- (oder Abschlag-) Funktion erfüllt, sondern auch eine Förderfunktion. Hierdurch wird ein Luftstrom erzeugt, der das abgeschlagene Gras in eine bestimmte Richtung fördert.

Motor und Schneideinrichtung sind von einem Gehäuse umschlossen. Das Gehäuse kann von einem Fahrgestell getragen sein oder selbst Räder aufweisen, die auf dem Rasen abrollen. Am Gehäuse ist ein Holm befestigt, mit dem der Rasenmäher manipuliert wird. Die Bedienungsperson greift dabei am Holm an, um den Rasenmäher über den Rasen hinweg zu führen und somit dessen Bewegungsbahn zu steuern. Außerdem bringt die Bedienungsperson über den Holm die Schubkraft zum Verfahren des Rasenmähers auf. Es gibt aber auch Rasenmäher, bei denen die genannten Räder einen Antrieb aufweisen, so dass die Bedienungsperson mittels des Holms lediglich noch die Steuerung auszuführen braucht.

Das Gehäuse weist einen Auslass auf, durch welchen der grasführende Luftstrom austritt. Der Luftstrom kann dabei an einer Seite des Rasenmähers austreten - d. h. seitlich der Bewegungsbahn, die der Rasenmäher ausführt. In neuerer Zeit sind aber Rasenmäher im Allgemeinen mit Grasfangbehältern ausgestattet. Ein solcher Grasfangbehälter hat eine Öffnung, die dem genannten Auslass des Gehäuses entspricht, und die an das Gehäuse über den Gehäuseauslass angeschlossen ist.

Der Grasfangbehälter kann einen Sack aus Gewebe oder anderen schlaffen Materialien aufweisen. Er kann aber auch aus einer Box mit starren Wänden bestehen. In jedem Falle ist die Wandung oder wenigstens ein Teil der Wandung des Grasfangbehälters luftdurchlässig. Handelt es sich um ein Gewebe, so ist dies von Natur aus porös. Handelt es sich um eine Box mit starren Wänden, so sind die Wände oder wenigstens einige der Wände perforiert. Bei Rasenmähern ohne Grasfangbehälter ist der Gehäuseauslass mit einer Klappe versehen, die um eine Schwenkachse schwenkbar gelagert ist. Der grasführende Luftstrom prallt gegen die Platte und öffnet diese, so dass der grasführende Luftstrom austreten kann.

Ein wichtiger Aspekt bei der Konstruktion eines Rasenmähers ist die Sicherheit. Zu diesem Zwecke sind alle modernen Rasenmäher mit einer Sicherheitseinrichtung ausgestattet, die immer dann den Motor und damit auch die Schneideinrichtung positiv stillsetzt, wenn die Möglichkeit besteht, dass der Benutzer mit der Hand in die Gefahrenzone greift. Dabei soll ebenfalls sichergestellt sein, dass ein Wiedereinschalten des Motors bei offener Gefahrenzone unmöglich ist.

Diese Gedanken sind beispielsweise in US 4 043 102 verwirklicht.

US 4 753 062 geht noch darüber hinaus. Gemäß der Lehre dieser Druckschrift läuft der Motor jedenfalls dann nicht um, wenn der Gefahrenbereich zugänglich ist, zum Beispiel dann, wenn die Abdeckklappe oder der Grasfangbehälter-Deckel geöffnet ist, oder wenn ein Schaltbügel, der dem Betätigen dient, nicht betätigt wird.

EP 0 903 074 A1 beschreibt ebenfalls eine Sicherheitseinrichtung gegen den Zugang zur Schneideinrichtung, wenn diese umläuft. Dabei ist ein Fernbetätigungskabel vorgesehen, das auf eine Motorbremse oder eine Kupplungsbremse oder einen elektrischen Schalter einwirkt. Dieses Fernbetätigungskabel wird mittels eines Schaltbügels betätigt, der am Führungsholm angelenkt ist.

DE 100 43 240 A1 beschreibt einen Rasenmäher gemäß dem Oberbegriff von Anspruch 1. Dabei ist ein Schaltbügel in zwei Positionen verschwenkbar, wodurch die Motorbremse aktiviert bzw. deaktiviert wird. Der Antrieb und der Führungsholm werden gegeneinander mittels einer Verriegelungseinrichtung bewirkt.

Die bisher bekannten Sicherheitseinrichtungen erfüllen ihre Funktionen zwar weitgehend, jedoch immer noch nicht zu 100 Prozent.

Der Erfindung liegt die Aufgabe zugrunde, einen Rasenmäher derart zu gestalten, dass eine perfekte Sicherheit gegen Personenschäden jeglicher Art gewährleistet ist.

Diese Aufgabe wird durch die Merkmale von Anspruch 1 gelöst. Vorteilhafte Ausgestaltungen sind in den Unteransprüchen beschrieben.

Die Erfindung geht wiederum aus von einem Rasenmäher mit einem Führungsholm sowie mit einem daran angelenkten Schaltbügel. Der Schaltbügel hat verschiedene Funktionen, je nachdem, in welcher Position er sich befindet. Jeder Position ist eine Funktion zugeordnet. Dabei erlaubt die Stellung des Schaltbügels in einer bestimmten Position lediglich die Ausführung derjenigen Funktion, die dieser Position zugeordnet ist. Das Ausüben der anderen Funktionen, die den anderen Positionen zugeordnet sind, ist somit ausgeschlossen.

Die Erfindung ist anhand der Zeichnung näher erläutert. Darin ist im einzelnen Folgendes dargestellt::
- Figur 1: zeigt in perspektivischer Darstellung einen Rasenmäher im Betriebszustand.
- Figur 2: zeigt den Rasenmäher von Figur 1 in einer Arbeitspause.
- Figur 3: zeigt in vergrößerter Darstellung die Sicherheitseinrichtung, umfassend einen Schaltbügel mit nachgeschalteten Bauteilen in einer ersten Position.
- Figur 4: zeigt den Gegenstand von Figur 3 mit dem Schaltbügel in einer zweiten Position.
- Figur 5: zeigt den Gegenstand von Figur 3 mit dem Schaltbügel in einer dritten Position.

Die Rasenmäher beider Versionen weisen die folgenden wesentlichen Teile auf: Als Motor ist ein Viertakt-Benzinmotor 1 vorgesehen, von dem hier nur eine Abdeckung erkennbar ist. Der Motor weist eine vertikale Abtriebswelle auf.

Man erkennt ein Gehäuse 2. Dieses umschließt mit seinem unteren, zylindrischen Teil eine hier nicht erkennbare Schneideinrichtung. Die Abdeckung des Motors 1 kann integraler Bestandteil des Gehäuses 2 sein.

Der Rasenmäher weist vier Räder 3 auf. Diese können vom Motor angetrieben sein. Dies ist jedoch nicht notwendigerweise der Fall.

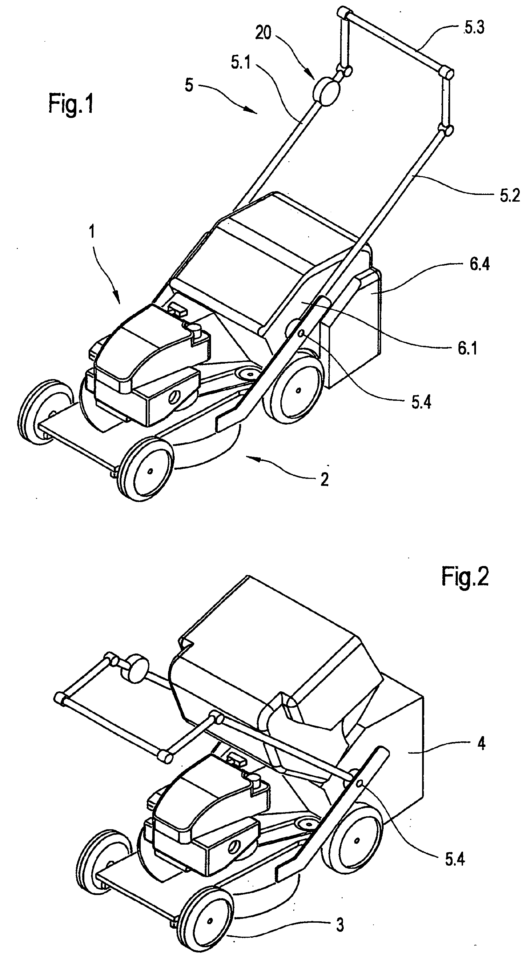

Ein wichtiges Bauteil ist ein Grasfangbehälter 4. Im vorliegenden Falle handelt es sich dabei um einen Kasten mit starren Wänden - hier in Figur 2 erkennbar.

Der Grasfangbehälter 4 ist an das Gehäuse abnehmbar angesetzt und verriegelt. Das Gehäuse 2 hat einen Auslass, und der Grasfangbehälter hat einen Einlass - beide hier nicht erkennbar. Auslass und Einlass sind deckungsgleich, so dass das Innere des Gehäuses 2 und das Innere des Grasfangbehälters 4 miteinander in leitender Verbindung stehen. Der Grasfangbehälter ist außerdem perforiert. Als Perforation können Schlitze oder Bohrungen oder sonstige Löcher dienen.

Man erkennt ferner einen Führungsholm 5. Dieser umfasst zwei Schenkel 5.1, 5.2 sowie einen diese beiden miteinander verbindenden Steg 5.3. Der Führungsholm 5 ist am Gehäuse 2 befestigt. Dabei ist er um eine horizontale Schwenkachse 5.4 verschwenkbar - siehe Figur 2. Der Führungsholm 5 trägt eine Sicherheits- und Schalteinrichtung 20.

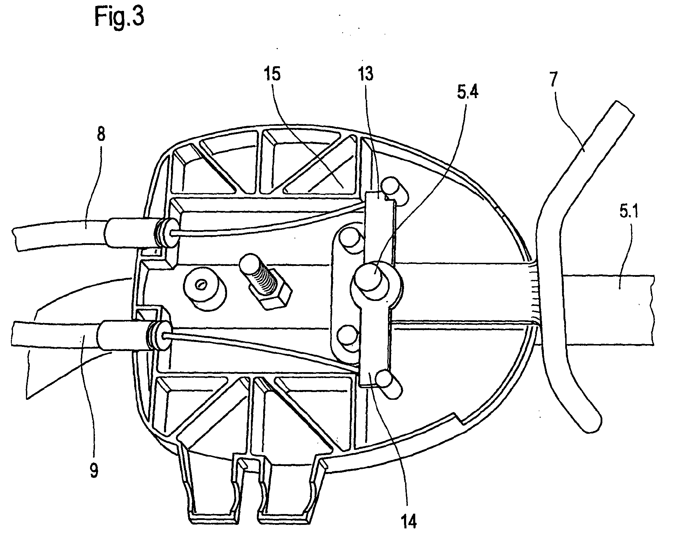

Ein wichtiges Bauteil ist der Schaltbügel 7. Dieser ist an einem der beiden Stege 5.1 oder 5.2 des Holmes angelenkt. Die Einzelheiten sind aus den Figuren 3, 4 und 5 erkennbar.

Figur 3 zeigt Schenkel 5.1 des Holmes 5. Man erkennt den Schaltbügel 7. Man erkennt ferner zwei Bowdenzüge, nämlich Bowdenzug 8 für den Motor und Bowdenzug 9 für eine Sperrklinke, die hier nicht dargestellt ist, und mit welcher Führungsholm 5 verriegelt wird, so dass er in jener Position verbleibt, die in Figur 2 gezeigt ist.

Die beiden Bowdenzüge 8 und 9 sind in einer Kunststoffplatte 10 gelagert. Diese Lagerplatte 10 ist am Schenkel 5.1 des Führungsholmes 5 fixiert.

Am Schaltbügel 7 ist ein T-Stück 11 mit Längsteil 11.1 und Querteil 11.2 angeschweißt. Der Schaltbügel ist an einem Drehzapfen 12 in der Lagerplatte 10 gelagert.

An den Drehzapfen 12 ist ein Mitnehmerstab 13 und ein Mitnehmerstab 14 angelenkt. Mitnehmerstab 13 greift mit seinem freien Ende am Ende des Bowdenzuges 8 für den Motor an, und Mitnehmerstab 14 mit seinem freien Ende am Bowdenzug 9 für die Sperrklinke des Führungsholmes. Die Mitnehmerstäbe 13, 14 arbeiten ferner mit Anschlägen zusammen - siehe Anschlag 15

Figur 3 veranschaulicht eine Mittelposition des Schaltbügels 7. In dieser Mittelposition ist der Motor ausgeschaltet. Der Führungsholm 5 ist in seiner Betriebsposition arretiert - siehe Figur 1. Die beiden Mitnehmerstäbe 13, 14 greifen an den Enden der beiden Bowdenzüge an. Die Enden der Bowdenzüge 8, 9 sind mit Stollen 8.1 bzw. 9.1 versehen, die sich in entsprechende Ausnehmungen der Mitnehmerstäbe 13, 14 einfügen.

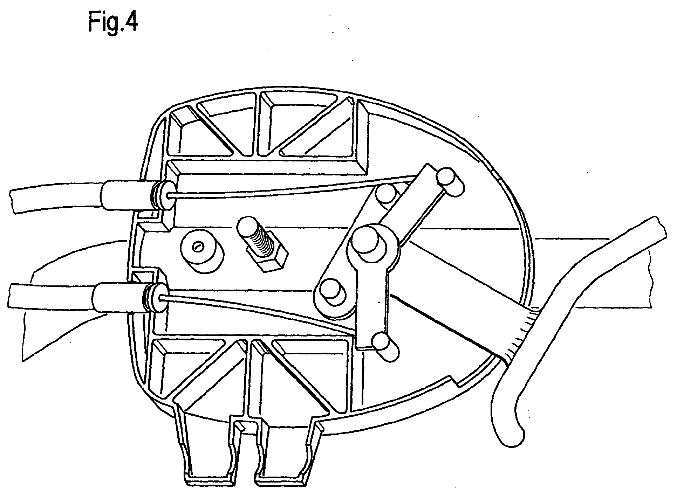

Figur 4 veranschaulicht eine herabgedrückte Position des Schaltbügels 7. Hierbei betätigt Mitnehmerstab 13 den Bowdenzug 8 für den Motor. Der Motor kann gestartet werden. Mitnehmerstab 14 hingegen bleibt in derselben Position wie gemäß Figur 3. Durch die genannte, hier nicht gezeigte Sperrklinke verbleibt Führungsholm 5 arretiert, somit in der in Figur 1 dargestellten Lage.

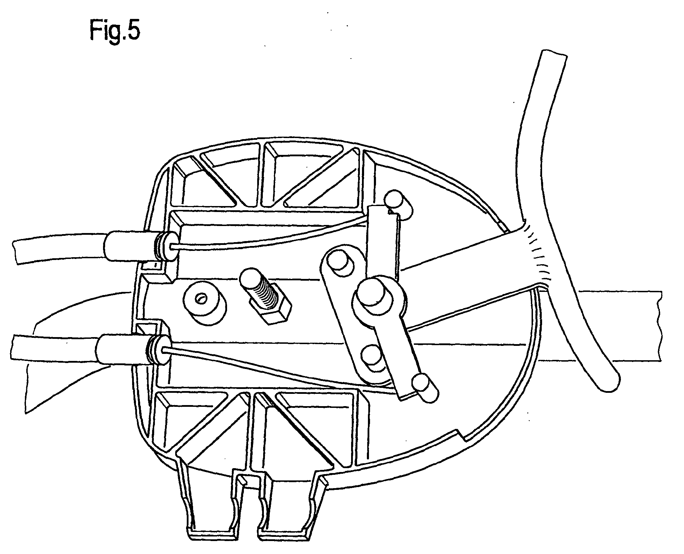

Figur 5 zeigt den Schaltbügel 7 in einer hochgeschwenkten Position. Motor 1 ist abgeschaltet, da Mitnehmerstab 13 sich in derselben Position befindet wie in Figur 3.

Mitnehmerstab 14 hingegen ist derart um den Drehzapfen 12 verschwenkt, dass Bowdenzug 9 für die Sperrklinke des Führungsholmes 5 gegenüber der Position gemäß Figur 3 auf die Bedienungsperson hin verschwenkt ist (hier im Gegenuhrzeigersinn). Dies bedeutet, dass die hier nicht gezeigte Sperrklinke entriegelt wird, so dass der Führungsholm in die in Figur 2 gezeigte Stellung verschwenkt werden kann.

## Patentansprüche

1. Rasenmäher
1.1 mit einer um eine vertikale Achse umlaufenden Schneideinrichtung;
1.2 mit einem Motor (1);
1.3 mit einem Gehäuse (2), das den Motor (1) und die Schneideinrichtung umgibt, und das einen in Fahrtrichtung nach hinten gerichteten Auslass für einen grasführenden Luftstrom aufweist;
1.4 es ist eine Sicherheits- und Schalteinrichtung (20) an einem Führungsholm (5) angelenkt, umfassend einen Schaltbügel (7),
**gekennzeichnet durch** die folgenden Merkmale:
1.5 der Schaltbügel (7) ist um einen Drehzapfen (12) in drei verschiedene Positionen verschwenkbar oder verschiebbar;
1.6 jeder Position ist wenigstens eine Funktion zugeordnet;
1.7 in einer nicht-operativen ersten Position ist der Motor (1) positiv stillgesetzt, und der Führungsholm (5) in seiner Betriebsstellung verriegelt;
1.8 in einer zweiten Position ist der Motor (1) aktivierbar, und der Führungsholm (5) ist verriegelt;
1.9 in einer dritten Position ist der Motor (1) positiv stillgesetzt, und die Arretierung des Führungsholmes (5) ist gelöst und somit schwenkbar;
1.10 die Stellung des Schaltbügels (7) in einer bestimmten Position erlaubt lediglich das Ausführen derjenigen Funktion, die dieser Position zugeordnet ist, so dass das Ausüben anderer Funktionen unmöglich ist.

2. Rasenmäher nach Anspruch 1, **dadurch gekennzeichnet, dass** zum Verriegeln des Führungsholms (5) bei dessen Verschwenken in Betriebsstellung eine Automatik vorgesehen ist.

3. Rasenmäher nach Anspruch 1 oder 2, **dadurch gekennzeichnet, dass** ein Bowdenzug (8) zum Betätigen des Motors vorgesehen ist.

4. Rasenmäher nach einem der Ansprüche 1 bis 3, **dadurch gekennzeichnet, dass** ein Bowdenzug (9) zum Betätigen einer Sperrklinke zum Verriegeln bzw. Entriegeln des Führungsholmes (5) vorgesehen ist.

5. Rasenmäher nach Anspruch 4, **dadurch gekennzeichnet, dass** am Drehzapfen (12) Mitnehmerstäbe (13, 14) vorgesehen sind, die beim Verschwenken des Schaltbügels (7) auf die Bowdenzüge (8, 9) je nach Schwenkrichtung einwirken.
